# EUROPÄISCHE PATENTANMELDUNG

(11) **EP 1 069 361 A1**
(43) Veröffentlichungstag der Anmeldung: **17.01.2001**
(21) Anmeldenummer: 00106513.5
(22) Anmeldetag: 25.03.2000
(51) Int. Cl.: F16L 9/133, B32B 27/32, B29C 47/00

(54) **Kunststoffrohr aus Polyethylen**

(30) Priorität: 25.03.1999 DE 19913444
(71) Anmelder: Hewing GmbH, 48607 Ochtrup (DE)
(72) Erfinder: Riesselmann, Franz-Josef, 49393 Lohne (DE)
(74) Vertreter: Hilleringmann, Jochen, Dipl.-Ing.

(57) **Zusammenfassung**

Das Kunststoffrohr aus PE ist mit einem Innenrohr (14) aus vernetztem HDPE und einem Außenrohr (16) aus vernetztem LDPE oder MDPE versehen.

## Beschreibung

Die Erfindung betrifft ein Kunststoffrohr aus Polyethylen (PE).

PEX-Rohre gewinnen immer mehr an Bedeutung, und zwar
a) als FBH- und Heizungsrohr und
b) als Trinkwasserrohr im Gebäude.

Eine neue Anwendung tut sich auch im Bereich außerhalb der Haustechnik auf, z.B. im Großrohrbereich für Gas. Die Vorteile des vernetzten PE-Rohres bei richtiger Materialauswahl sind:
a) Besseres slow und rapid-crack-Verhalten gegenüber dem unvernetztem Rohr. Mit dieser Eigenschaft wird das Rissfortpflanzungsverhalten beschrieben, d.h. wie sich das Rohr verhält, wenn es außen beschädigt wird, z.B. bei der Montage oder durch Erdverschiebungen. Unvernetzte Rohre müssen bei der Montage in ein Sandbett verlegt werden, was mit erheblichen Kosten verbunden ist (Wegschaffen des Aushubs, Heranschaffen des Sandes). Mit einem PEX-Rohr ist eine grabenlose Verlegung möglich.
b) Besseres Verhalten bei aggressiven Medien, z.B. Chlor im Trinkwasser. Die Trinkwasserzusammensetzung ist weltweit nicht von bester Qualität, sie wird aufgrund des steigenden Verbrauchs auch nicht besser, da die Trinkwasservorräte begrenzt sind. Die Folge ist, dass dem Trinkwasser desinfizierende Mittel zugesetzt werden müssen. Diese greifen wiederum unterschiedlich stark die Rohrmaterialien an.

Der Erfindung liegt die Aufgabe zugrunde, ein PEX-Rohr mit guter Resistenz gegen Zusatzstoffe im Wasser und gutes mechanisches Verhalten bei der Verlegung bzw. im verlegten Zustand im Erdreich zu schaffen.

Zur Lösung dieser Aufgabe wird mit der Erfindung ein Kunststoffrohr aus PE vorgeschlagen, das versehen ist mit
- einem Innenrohr aus vernetztem HDPE und
- einem Außenrohr aus vernetztem LDPE oder MDPE.

Bei dem erfindungsgemäßen Mehrschichtrohr wird ein Innenrohr aus einem vernetzten HDPE-Material eingesetzt. Dieses Material weist eine gute Chemikalienresistenz auf, ist jedoch relativ spröde. Zum Schutz des spröden Innenrohres wird daher erfindungsgemäß auf dieses eine Schicht aus einem vernetzten LDPE oder MDPE aufgebracht. Diese beiden Materialien weisen eine gute Kerbunempfindlichkeit auf und schützen damit das Innenrohr.

Das erfindungsgemäße Mehrschichtrohr lässt sich insbesondere durch Koextrusion herstellen. Der Vorteil des außenliegenden LDPE- oder MDPE-Materials ist darüber hinaus, dass an das Mehrschichtrohr von außen Elektro-Schweißmuffen anschweißbar sind.

Zweckmäßigerweise ist das Innenrohr mit organoleptischen Eigenschaften ausgestattet.

Vorteilhafterweise liegt die Dichte des PE-Materials des Innenrohres zwischen 0,94 und 0,96 g/cm³ und vorzugsweise zwischen 0,944 und 0,95 g/cm³. Es ist aber ebenso möglich, dass der Dichtebereich für das PE-Material des Innenrohres durch jede Kombination der unteren und der oberen Grenzen der zuvor genannten Bereiche definiert ist. Beispielsweise kann die Dichte des PE-Materials des Innenrohres also zwischen 0,94 und 0,944 g/cm³ oder 0,95 und 0,96 g/cm³ oder 0,94 und 0,95 g/cm³ oder 0,944 und 0,96 g/cm³ liegen.

Vorzugsweise hat das PE-Material des Innenrohres eine Viskosität, wie sie einer Melt Flow Rate (MFR) von 0,1 bis 1,0 g/10 min (gemessen bei einer Erwärmung des PE-Materials auf 190 °C und einer Gewichtsbelastung von 5 kp - entsprechend einer Gewichtskraft von 50 N) entspricht. Vorzugsweise liegt die MFR zwischen 0,3 und 0,6 g/10 min. Kombinationen der unteren und oberen Grenzen der zuvor genannten MFR-Bereiche sind möglich.

Das PE-Material des Außenrohres hat eine Dichte, die zweckmäßigerweise zwischen 0,927 und 0,938 g/cm³ und vorzugsweise zwischen 0,934 und 0,938 g/cm³ liegt. Alternativ kann die Dichte des PE-Materials des Außenrohres auch zwischen 0,927 und 0,934 g/cm³ liegen. Die Viskosität (gemessen als Melt Flow Rate bei einer Erwärmung auf 190 °C und einer Gewichtsbelastung von 2,16 kp - entspricht ca. 21 N Gewichtskraft) des PE-Materials des Außenrohres beträgt vorzugsweise 0,1 bis 4,0 g/10 min und insbesondere 0,2 bis 0,5 g/10 min. Kombinationen der unteren und der oberen Grenzen dieser beiden MFR-Bereiche sind möglich.

Insbesondere ist vorgesehen, dass innen auf dem Innenrohr eine Schicht aus unvernetztem oder leicht vernetztem HDPE (Vernetzungsgrad bis zu 50 %) angeordnet ist. Für die Rohstoffeigenschaften dieses HDPE-Materials gelten vorteilhafterweise die gleichen Bereiche, wie sie oben im Zusammenhang mit der Beschreibung der Rohrstoffeigenschaften des HDPE-Materials des Innenrohres angegeben sind.

Zweckmäßigerweise beträgt der Vernetzungsgrad des Material des Innen- und des Außenrohres zumindest 60 % (z.B. bei Silanvernetzung) und insbesondere zumindest 65 % (z.B. bei Strahlenvernetzung).

Sämtliche bei dem erfindungsgemäßen Rohr eingesetzte PE-Materialien sind vorzugsweise mit an sich bekannten Stabilisatoren versehen, um die Eigenschaften an die Langzeitstabilität, die Druckstabilität und die Temperaturstabilität zu erfüllen.

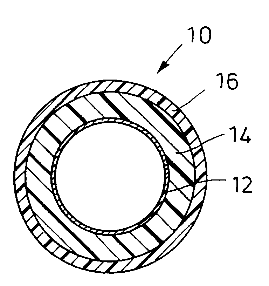

Nachfolgend wird die Erfindung anhand der Zeichnung näher erläutert. In der Zeichnung ist ein Längsschnitt durch ein Mehrschichtrohr 10 gezeigt, so dass der Schichtenaufbau erkennbar ist.

Das Mehrschichtrohr 10 besteht aus einem hauptsächlich für die Druck-, Langzeit- und Temperaturstabilität verantwortliches Innenrohr 14, dass aus einem vernetzten HDPE-Material besteht. Die Rohstoffeigenschaften und der Vernetzungsgrad dieses Innenrohres 14 sind oben angegeben.

Zum besseren Verbinden des Rohres 10 mit einem Elektro-Schweißfitting, der (auch) an der Innenseite des Innenrohres 14 anliegt, weist das Innenrohr 14 eine Innenauskleidungsschicht 12 auf, die aus einem unvernetzten oder leicht vernetzten HDPE-Material besteht. Diese Innenauskleidungsschicht 14 braucht nicht notwendigerweise chemikalienresistent zu sein. Mit anderen Worten könnte also durchaus toleriert werden, wenn die Innenauskleidungsschicht 14 in den Bereichen außerhalb des Elektro-Schweißfittings angriffen wird. Diese "Korrosion" findet spätestens dort ihr Ende, wo das Innenrohr 14 beginnt. Denn das HDPE-Material des Innenrohres 14 ist derart vernetzt und weist solche Rohstoffeigenschaften auf (siehe oben), dass es resistent gegen Chemikalien ist und damit nicht angegriffen werden kann.

Außen um das Innenrohr 14 herum ist ein Außenrohr 16 aus vernetztem LDPE- oder MDPE-Material angeordnet, das die oben für das PE-Material des Außenrohres angegebenen Rohstoffeigenschaften aufweist.

## Patentansprüche

1. Kunststoffrohr aus Polyethylen (PE), mit
- einem Innenrohr (14) aus vernetztem high density Polyethylen-(HDPE-)Material und
- einem Außenrohr (16) aus vernetztem low oder medium density Polyethylen-(LDPE- oder MDPE-)Material.

2. Kunststoffrohr nach Anspruch 1, dadurch gekennzeichnet, dass das PE-Material des Innenrohres (14) eine Dichte aufweist, die zwischen etwa 0,94 bis 0,96 g/cm³ oder 0,944 und 0,95 g/cm³ oder 0,94 und 0,95 g/cm³ oder 0,944 und 0,96 g/cm³ oder 0,94 und 0,944 g/cm³ oder 0,95 und 0,96 g/cm³ liegt.

3. Kunststoffrohr nach Anspruch 1 oder 2, dadurch gekennzeichnet, dass das PE-Material des Außenrohres (16) eine Dichte aufweist, die zwischen 0,927 und 0,938 g/cm³ oder 0,934 und 0,938 g/cm³ oder 0,927 und 0,934 g/cm³ liegt.

4. Kunststoffrohr nach einem der Ansprüche 1 bis 3, dadurch gekennzeichnet, dass das PE-Material des Innenrohres (14) im unvernetzten Zustand bei 190 °C Erwärmung und einer Gewichtskraft von ca. 50 N (5 kp) eine Melt Flow Rate von 0,1 bis 1,0 g/10 min oder 0,3 bis 0,6 g/10 min oder 0,1 bis 0,6 g/10 min oder 0,3 bis 1,0 g/10 min oder 0,1 bis 0,3 g/10 min oder 0,6 bis 1,0 g/10 min aufweist.

5. Kunststoffrohr nach einem der Ansprüche 1 bis 4, dadurch gekennzeichnet, dass das PE-Material des Außenrohres (16) im unvernetzten Zustand bei 190 °C Erwärmung und einer Gewichtskraft von ca. 22 N (2,16 kp) eine Melt Flow Rate von 0,1 bis 4,0 g/10 min oder 0,2 bis 0,5 g/10 min oder 0,1 bis 0,5 g/10 min oder 0,2 bis 4,0 g/10 min oder 0,1 bis 0,2 g/10 min oder 0,5 bis 4,0 g/10 min aufweist.

6. Kunststoffrohr nach einem der Ansprüche 1 bis 5, dadurch gekennzeichnet, dass das Innenrohr (14) organoleptisch ist.

7. Kunststoffrohr nach einem der Ansprüche 1 bis 6, dadurch gekennzeichnet, dass innen auf dem Innenrohr (14) eine Schicht (12) aus unvernetztem oder leicht vernetztem HDPE-Material angeordnet ist.

8. Kunststoffrohr nach einem der Ansprüche 1 bis 7, dadurch gekennzeichnet, dass der Vernetzungsgrad des PE-Materials des Innenrohres (14) und/oder des Außenrohres (16) mindestens 60 % und vorzugsweise mindestens 65 % beträgt.

9. Kunststoffrohr nach Anspruch 7, dadurch gekennzeichnet, dass der Vernetzungsgrad der Schicht (12) aus PE-Material bis zu 50 % beträgt.
